**Europäisches Patentamt**

**European Patent Office**

**Office européen des brevets**

(11) Veröffentlichungsnummer: **0 037 976 B1**

(12) **EUROPÄISCHE PATENTSCHRIFT**

(45) Veröffentlichungstag der Patentschrift: 14.12.83

(21) Anmeldenummer: **81102503.0**

(22) Anmeldetag: **02.04.81**

(51) Int. Cl.³: **G 01 D 15/16**

(54) Papiertransportvorrichtung für ein Aufzeichnungsgerät.

(30) Priorität: **11.04.80 DE 3014043**

(43) Veröffentlichungstag der Anmeldung: **21.10.81 Patentblatt 81/42**

(45) Bekanntmachung des Hinweises auf die Patenterteilung: **14.12.83 Patentblatt 83/50**

(84) Benannte Vertragsstaaten: **DE FR GB IT**

(56) Entgegenhaltungen:
**FR - A - 2 203 504**
**FR - A - 2 334 943**
**US - A - 4 054 883**

**HEWLETT-PACKARD JOURNAL, Band 18, Nr. 11, Juli 1967, Seiten 1-12 R.A. SANDERSON: "Pressurized ink recording on Z-fold strip charts"**
**HEWLETT-PACKARD JOURNAL, Band 24, Nr. 9, Mai 1973, Seiten 10-18 L. BRUNETTI: A more rugged, cleaner writing oscillographic ink recorder"**

(73) Patentinhaber: **SIEMENS AKTIENGESELLSCHAFT, Berlin und München Wittelsbacherplatz 2, D-8000 München 2 (DE)**

(72) Erfinder: **Skafvenstedt, Bengt, Rörstrandsgatan 33 A, S-113 40 Stockholm (SE)**
Erfinder: **Ahlgren, Sture, Mossrosbacken 11, S-162 40 Vällingby (SE)**

Papiertransportvorrichtung für ein Aufzeichnungsgerät

Die Erfindung bezieht sich auf eine Papiertransportvorrichtung für ein Aufzeichnungsgerät mit einer Ablage für das unbeschriebene Aufzeichnungspapier und wenigstens einer von einem Motor angetriebenen Antriebsrolle nebst gegebenenfalls weiteren Führungsrollen zum Transport des Papiers von der Ablage über eine Schreibfläche, in deren Bereich ein Flüssigkeitsstrahlschreiber angeordnet ist.

Eine Papiertransportvorrichtung dieser Art ist aus dem Siemens-Prospekt «Mingograf 34» bekannt. Eigenschaft dieser Papiertransportvorrichtung ist, dass der Flüssigkeitsstrahlschreiber auch dann noch Schreibflüssigkeit ausspritzt, wenn der Vorrat an Aufzeichnungspapier erschöpft ist, sofern dies nicht rechtzeitig durch eine Bedienungsperson registriert und mit Ausschalten des Gerätes beantwortet wird.

Aus der Literaturstelle «Hewlett-Packard Journal Bd. 24, No. 9, Mai 1973, S. 10-17» ist zwar ein Schreibflüssigkeitssystem bekannt, bei dem das Ventil für die Zufuhr von Tinte schliesst, wenn das Aufzeichnungspapier zu Ende ist. Die Funktion der Ausschaltung der Tintenzufuhr ist in der Literaturstelle jedoch nicht beschrieben.

Der Erfindung liegt die Aufgabe zugrunde, bei einer Papiertransportvorrichtung der eingangs genannten Art die Flüssigkeitszufuhr sicher und einfach abzuschalten, bevor das Aufzeichnungspapier den Spritzbereich des Flüssigkeitsstrahlschreibers verlässt.

Die Aufgabe wird erfindungsgemäss dadurch gelöst, dass der motorgetriebenen Antriebsrolle ein Leerlaufindikator zugeordnet ist, der den Leerlauf der Antriebsrolle erfasst und ein Abschaltsignal für den Flüssigkeitsstrahlschreiber erzeugt.

Hierdurch werden unnötige Verschmutzungen durch Schreibflüssigkeit mit Sicherheit vermieden.

Mit dem Aufbrauch von Aufzeichnungspapier geht die nicht abgeschaltete Transportrolle in den Leerlaufbetrieb über.

Dieser Leerlaufbetrieb wird gemäss der Erfindung registriert und mit selbsttätiger Abschaltung des Flüssigkeitsstrahlschreibers beantwortet. Die Gefahr, dass der Aufzeichnungsträger durch Schreibflüssigkeit nach Abzug des Papieres verschmutzt wird, ist damit gebannt.

Weitere Vorteile und Einzelheiten der Erfindung ergeben sich aus der nachfolgenden Beschreibung eines Ausführungsbeispieles anhand der Zeichnung in Verbindung mit den Unteransprüchen.

Es zeigen:

Fig. 1 den schematischen Aufbau einer Papiertransportvorrichtung gemäss der Erfindung,

Fig. 2 das Prinzipschaltbild der Abschaltsteuerung,

Fig. 3 ein Spannungsdiagramm der wesentlichen Signalspannungsverläufe,

Fig. 4 und 5 speziell zur Förderung des Abschaltvorganges gestaltete Enden von Papierbahnen.

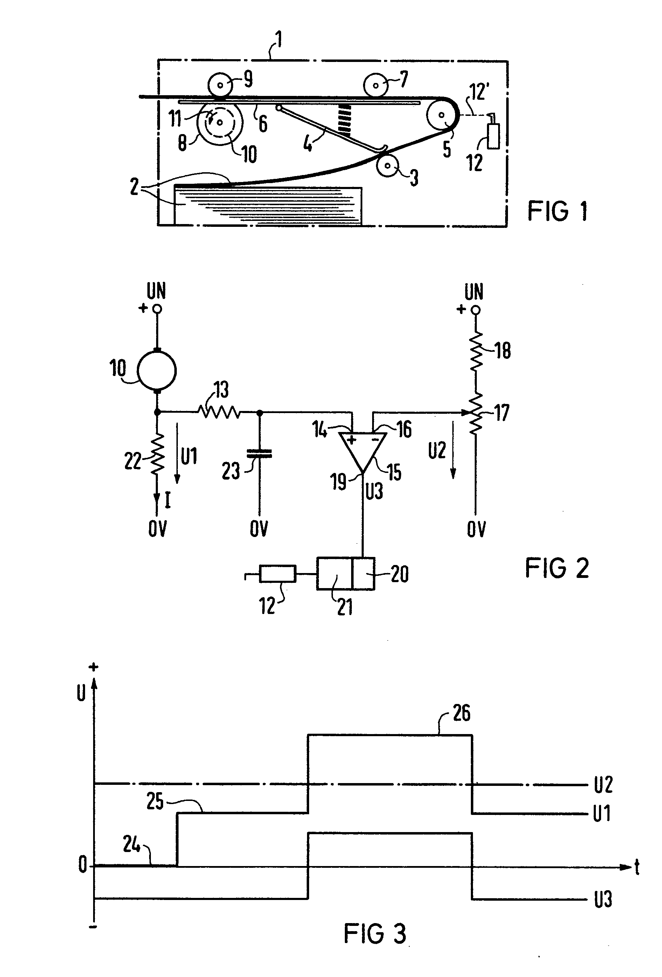

In Fig. 1 ist ein Aufzeichnungsgerät 1 mit einem Stoss Aufzeichnungspapier 2 geladen. Das Papier 2 wird in Transportrichtung vom Schreibpapierstoss zunächst über eine Bremsrolle 3 geleitet. Ein Andruckstück 4 drückt das Papier federnd gegen die Bremsrolle 3. Durch diesen Bremsmechanismus wird das Papier 2 zwischen Bremsrolle 3 und weiteren nachfolgenden Rollen 5, 7, 8, 9 auf einem Aufzeichnungsträger 6 straff gehalten. Die Rolle 5 ist dabei eine Formrolle, während die Rolle 7 über dem Aufzeichnungsträger 6 eine Löschrolle ist, die zum Trocknen der Aufzeichnung auf dem dazwischenliegenden Papier dient. Die Rolle 8 dient schliesslich zusammen mit der federnd angedrückten Gegendruckrolle 9 als Antriebsrolle für das Papier 2. Sie wird mittels Motor 10 in Richtung des Pfeiles 11 gedreht.

Die Aufzeichnung erfolgt durch den Tintenstrahl 12' eines Flüssigkeitsstrahlschreibers 12 im Bereich der Formrolle 5.

Im Prinzipschaltbild der Fig. 2 ist der Motor 10 für die Antriebsrolle 8 über ein aus Widerstand 13 und Kondensator 23 aufgebautes Tiefpassfilter am Pluseingang 14 eines Komparators 15 angeschlossen. Der Minuseingang 16 des Komparators 15 liegt am Abgriff eines Potentiometers 17 mit Vorwiderstand 18. Der Ausgang 19 des Komparators 15 ist mit einem Ventil 20 eines Pumpensystems 21 für die Schreibtinte des Flüssigkeitsstrahlschreibers 12 verbunden. Das Ventil 20 ist bei positiver Ausgangsspannung $U3$ des Komparators 15 für die Zufuhr von Tinte zum Flüssigkeitsstrahlschreiber 12 geöffnet. Bei negativer Ausgangsspannung $U3$ des Komparators 15 ist es hingegen geschlossen, und der Flüssigkeitsstrahlschreiber stoppt die Aufzeichnung.

Die Funktionsweise der im Prinzipschaltbild dargestellten Vorrichtung ist wie folgt:

Der vom Netz $U_N$ im Motor 10 eingespeiste Strom $I$ erzeugt über dem Widerstand 22 eine Spannung $U1$, die dem Pluseingang 14 des Komparators 15 über das Tiefpassfilter 13, 23 zugeleitet wird. Am Minuseingang 16 des Komparators 15 liegt eine Spannung $U2$, die über das Potentiometer 17 und den Vorwiderstand 18 aus der Netzspannung $U_N$ abgeleitet ist.

Der Abgriff des Potentiometers 17 ist so eingestellt, dass die Spannung $U2 > 0$ ist. Bei abgeschaltetem Motor 10 ist der Strom $I = 0$ und demzufolge auch die Spannung über dem Widerstand 22 $U1 = 0$. Damit gilt $U1 < U2$ und $U3 < 0$. Das Ventil 20 bleibt geschlossen. Bei Leerlauf des Motors 10 gilt ebenfalls bei entsprechender Einstellung des Potentiometers 17 $U1 < U2$. Auch für diesen Betriebsfall ist das Ventil 20 also geschlossen.

Wird nun der Motor 10 hingegen belastet, d.h. zieht die Antriebsrolle 8 das Aufzeichnungspapier, so steigt der Strom $I$ und damit auch die Spannung $U1$. Die dem Komparator 15 über den Pluseingang 14 zugeführte Spannung $U1$ wird nun grösser als die über den Minuseingang 16 zugeleitete Spannung $U2$. Die Ausgangsspannung $U3$ wird positiv; das Ventil 20 geöffnet und der Flüssigkeitsstrahlschreiber 12 schreibt.

Gemäss der Erfindung wird der Schreibvorgang jedoch abrupt unterbrochen, in dem Augenblick, in dem das letzte Ende Aufzeichnungspapier 2 die Bremsrolle 3 verlässt. Der Motor läuft jetzt leer. Der Strom $I$ und damit auch die Spannung $U1$ sinken.

Der Komparator 15 registriert den Leerlaufbetrieb und reagiert mit einem Ausgangssignal U3 < 0. Das Ventil 20 schliesst und der Schreibvorgang wird unterbrochen.

Die Fig. 3 zeigt eine Möglichkeit für eine Einstellung der Spannung U2 am Potentiometer 17 in Abhängigkeit von den Spannungen U1 und U3. Die Spannung U1 variiert in Abhängigkeit von der Belastung des Motors 10 in Stufen 24, 25, 26. In Stufe 24 ist der Motor 10 ausgeschaltet. Die Stufe 25 zeigt den Leerlauf; hier ist immer noch U1 < U2. Die Ausgangsspannung U3 des Komparators 15 ist in beiden Fällen, also sowohl bei gestopptem als auch leerlaufendem Motor 10, negativ. Dies ändert sich erst, wenn der Motor belastet wird. Die Spannung U1 geht zur Stufe 26; U1 wird grösser als U2 und damit U3 > 0.

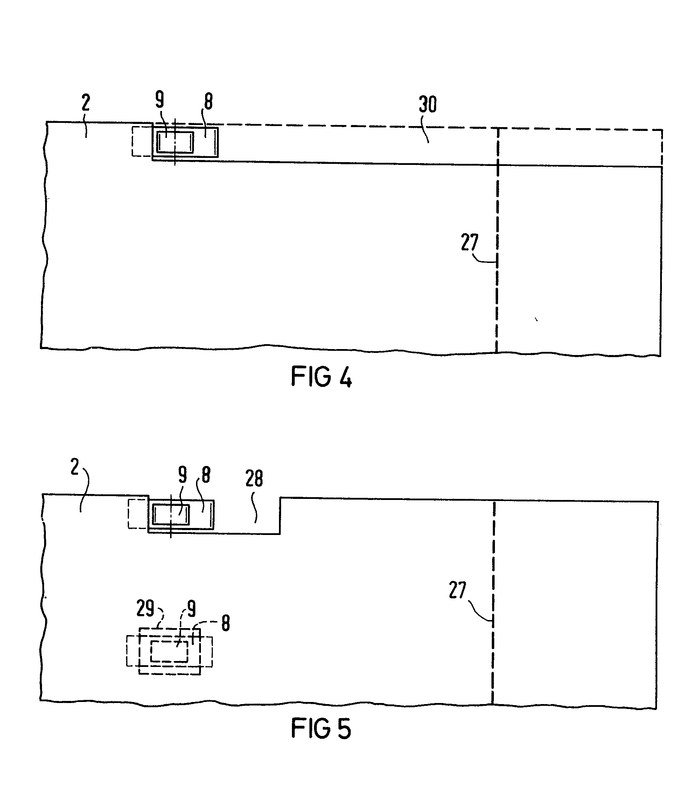

In der Fig. 4 ist dargestellt, dass das Aufzeichnungspapier 2 am Bahnende so ausgeschnitten ist, dass der ausgeschnittene Teil 30 frei von der Antriebsrolle 8 geht, noch bevor der Endstreifen des Papiers den Spritzbereich 27 des Flüssigkeitsstrahlschreibers verlassen hat. Diese spezielle Ausbildung des Aufzeichnungspapiers sorgt für eine Abschaltung des Schreibvorganges bei noch eingespanntem Papierende. Auch der letzte Rest noch verspritzter Tinte trifft also nur Papier und nicht den Aufzeichnungsträger.

Fig. 5 zeigt Varianten im Sinne der Ausbildung als Kurzausschnitt 28 am Papierrand oder als Loch 29 in der Mitte der Papierlaufbahn mit entsprechend mittig angeordneter Antriebsrolle 8.

## Patentansprüche

1. Papiertransportvorrichtung für ein Aufzeichnungsgerät mit einer Ablage für das unbeschriebene Aufzeichnungspapier (2) und wenigstens einer von einem Motor (10) angetriebenen Antriebsrolle (8) nebst gegebenenfalls weiteren Führungsrollen (5, 9) zum Transport des Papiers von der Ablage über eine Schreibfläche, in deren Bereich ein Flüssigkeitsstrahlschreiber (12) angeordnet ist, dadurch gekennzeichnet, dass der motorgetriebenen Antriebsrolle (8) ein Leerlaufindikator (13 bis 19, 22, 23) zugeordnet ist, der den Leerlauf der Antriebsrolle (8) erfasst und ein Abschaltsignal für den Flüssigkeitsstrahlschreiber (12) erzeugt.

2. Papiertransportvorrichtung nach Anspruch 1, dadurch gekennzeichnet, dass der Leerlaufindikator (13 bis 19, 22, 23) einen Komparator (15) umfasst, der am einen Signaleingang (14) mit einem ersten Signal (U1) gespeist ist, das mit zunehmender Belastung der Antriebsrolle (8) stufenweise ansteigt, und an dessen zweitem Signaleingang (16) ein zweites Signal (U2) anliegt, dessen Grösse so eingestellt ist, dass sie wertmässig zwischen dem Spannungswert für Leerlauf und dem Spannungswert für Belastung des ersten Signals (U1) liegt.

3. Papiertransportvorrichtung nach Anspruch 2, dadurch gekennzeichnet, dass der Komparator (15) ein Abschaltsignal für den Flüssigkeitsstrahlschreiber (12) erzeugt, wenn das den Betriebszustand der Abtriebsrolle (8) anzeigende erste Signal (U1) das Vergleichssignal (zweites Signal U2) unterschreitet.

4. Papiertransportvorrichtung nach Anspruch 2, dadurch gekennzeichnet, dass der Komparator (15) ein Einschaltsignal für den Flüssigkeitsstrahlschreiber (12) erzeugt, wenn das erste Signal (U1) das Vergleichssignal (zweites Signal U2) überschreitet.

5. Papiertransportvorrichtung nach Anspruch 3 oder 4, dadurch gekennzeichnet, dass der Flüssigkeitsstrahlschreiber (12) ein Pumpsystem (21) mit steuerbarem Ventil (20) für die Aufzeichnungsflüssigkeit umfasst, welches Ventil (20) durch ein Abschaltsignal des Komparators (15) geschlossen und durch ein Einschaltsignal wieder geöffnet wird.

6. Papiertransportvorrichtung mit einem diese durchlaufenden Aufzeichnungspapier nach einem der Ansprüche 1 bis 5, dadurch gekennzeichnet, dass das Aufzeichnungspapier (2) am Ende seiner Laufbahn einen Ausschnitt (28, 30) aufweist, der die Antriebsrolle (8) erreicht, bevor das Ende des Aufzeichnungspapiers (2) den Spritzbereich (27) des Flüssigkeitsstrahlschreibers (12) verlassen hat.

## Revendications

1. Dispositif de transport du papier dans un enregistreur avec un moyen de stockage pour le papier d'enregistrement vierge (2) et au moins un galet d'entraînement (10) entraîné par un moteur ainsi qu'éventuellement d'autres galets de guidage (5, 9) pour le transport du papier du moyen de stockage sur une surface d'écriture dans la zone de laquelle est disposé un traceur à jet de liquide (12), caractérisé par le fait qu'au galet d'entraînement (8) entraîné par le moteur est associé un indicateur de fonctionnement à vide (13 à 19, 22, 23,) qui saisit la marche à vide du galet d'entraînement (8) et produit un signal de débranchement pour le traceur à jet de liquide (12).

2. Dispositif de transport du papier selon la revendication 1, caractérisé par le fait que l'indicateur de marche à vide (13 à 19, 22, 23) comporte un comparateur (15) qui est alimenté, à une entrée de signaux (14) avec un premier signal (U1) qui, pour une charge croissante du galet d'entraînement (8) croît par paliers, et à la seconde entrée de signaux (16) duquel est appliqué un second signal (U2) dont la grandeur est réglée de telle façon que du point de vue de sa valeur elle se situe entre la valeur de la tension pour la marche à vide et la valeur de la tension pour la charge du premier signal (U1).

3. Dispositif de transport du papier selon la revendication 2, caractérisé par le fait que le comparateur (15) produit un signal de débranchement pour le traceur à jet de liquide (12) lorsque le premier signal (U1) qui indique l'état de fonctionnement du galet d'entraînement (8), dépasse le signal de comparaison (second signal) (U2).

4. Dispositif de transport du papier selon la revendication 2, caractérisé par le fait que le comparateur (15) produit un signal de branchement pour le traceur à jet de liquide (12) lorsque le premier signal (U1) dépasse le signal de comparaison (second signal) (U2).

5. Dispositif de transport du papier selon la revendication 3 ou 4, caractérisé par le fait que le traceur à jet de liquide (12) comprend un système de pompe (21) à soupape commandable (20) pour le liquide traceur, laquelle soupape (20) est fermée par un signal de débranchement du comparateur (15) et est à nouveau ouverte par un signal de branchement.

6. Dispositif de transport du papier avec un papier d'enregistrement qui le traverse, selon l'une des revendications 1 à 5, caractérisé par le fait que le papier d'enregistrement (2) comporte, à la fin de sa trajectoire, une encoche (28, 30) qui atteint le galet d'entraînement (8), avant que la fin du papier d'enregistrement (2) quitte la zone de projection (27) du traceur à jet de liquide (12).

**Claims**

1. A paper transport device for a recording apparatus having a storage point for the blank recording paper (2) and at least one drive roller (8) which is operated by a motor (10), and, if necessary, further guide rollers (5, 9), which serve to transport the paper from the storage point across a recording surface, in the vicinity of which is arranged a liquid jet recorder (12), characterised in that the motordriven drive roller (8) is provided with a no-load operation indicator (13 to 19, 22, 23) which detects the no-load operation of the drive roller (8) and produces a switch-off signal for the liquid jet recorder (12).

2. A paper transport device according to claim 1, characterised in that the no-load operation indicator (13 to 19, 22, 23) comprises a comparator (15) which at one signal input (14) is fed with a first signal (U1) which increases stepwise with increasing load on the drive roller (8), and to the second signal input (16) of which is applied a second signal (U2), the magnitude of which is so adjusted that its value lies between the voltage value for no-load operation and the voltage value for the load of the first signal (U1).

3. A paper transport device according to claim 2, characterised in that the comparator (15) produces a switch-off signal for the liquid jet recorder (12) if the first signal (U1) indicating the operating state of the drive roller (8) falls below the comparison signal (second signal U2).

4. A paper transport device according to claim 2, characterised in that the comparator (15) produces a switch-on signal for the liquid jet recorder (12) if the first signal (U1) exceeds the comparison signal (second signal U2).

5. A paper transport device according to claim 3 or claim 4, characterised in that the liquid jet recorder (12) comprises a pumping system (21) having a controllable valve (20) for the recording liquid, which valve (20) is closed by a switch-off signal of the comparator (15) and opened by a switch-on signal.

6. A paper transport device having a recording paper passing through said device, according to one of claims 1 to 5, characterised in that, at the end of its running length, the recording paper (2) has a cutaway section (28, 30) which reaches the drive roller (8) before the end of the recording paper (2) has left the spraying region (27) of the liquid jet recorder (12).

FIG 1

FIG 2

FIG 3

FIG 4

FIG 5